# EUROPÄISCHE PATENTSCHRIFT

(11) **EP 3 057 887 B1**
(45) Veröffentlichungstag und Bekanntmachung des Hinweises auf die Patenterteilung: **02.09.2020**
(21) Anmeldenummer: 14786645.3
(22) Anmeldetag: 14.10.2014
(51) Int. Cl.: B65G 1/04

(54) **LAGERSYSTEM MIT IN VERSCHIEDENEN EBENEN VERDREHTEN LAGERSTRUKTUREN**
STORAGE SYSTEM HAVING STORAGE STRUCTURES ROTATED IN DIFFERENT PLANES
SYSTÈME DE STOCKAGE POURVU DE STRUCTURES DE STOCKAGE AMENÉES EN ROTATION DANS DIFFÉRENTS PLANS

(30) Priorität: 16.10.2013 DE 102013220998
(43) Veröffentlichungstag der Anmeldung: 24.08.2016
(73) Patentinhaber: Siemens Aktiengesellschaft, 80333 München (DE)
(72) Erfinder: KLEIN, Matthias, 63456 Hanau (DE)
(74) Vertreter: Maier, Daniel Oliver
(86) Internationale Anmeldenummer: PCT/EP2014/071964
(87) Internationale Veröffentlichungsnummer: WO 2015/055617

(56) Entgegenhaltungen:
- EP-A1- 0 589 844
- DE-A1-102009 017 241
- DE-A1-102009 035 542
- DE-U1- 20 211 321
- US-A- 5 564 879
- US-A1- 2003 093 176
- US-A1- 2009 136 328
- Ssi Schäfer: "Mehrgeschossanlagen", , 23 August 2013 (2013-08-23), XP055552188, Retrieved from the Internet: URL:https://web.archive.org/web/2013082323 3130/http://www.ssi-schaefer.de/lagertechn ik/lagerbuehnen/mehrgeschossanlagen.html [retrieved on 2019-02-05]

## Beschreibung

Die Erfindung betrifft ein Lagersystem mit einer Lagereinrichtung zum Lagern von Ladeeinheiten und ein Verfahren zum Verlagern von Ladeeinheiten in einem Lagersystem.

DE 10 2009 035 542 A1 betrifft eine Vorrichtung zum Handhaben von Stückgütern, die über Transportmittel ungeordnet nebeneinanderliegend zu- und geordnet hintereinanderliegend abgeführt werden, wobei deren Handhabung in einer im Wesentlichen horizontalen Ebene erfolgt, in der jeweils eine Vielzahl von einzeln ansteuerbaren Fördermitteln arrayförmig angeordnet sind, mittels derer die darauf aufliegenden Stückgüter,deren Position und Zielinformation Bekannte sind, in der Ebene individuell bewegbar und in einer den Sortierkriterien entsprechende Reihenfolge einem Abförderer zuführbar sind. Um die Vorteile einer solchen Vorrichtung mit deutlich geringerem Flächenbedarf und/oder größerer Durchsatzleistung zu verbinden, wird vorgeschlagen, mindestens eine zweite Ebene, in der zur Handhabung der Stückgüter jeweils eine Vielzahl von einzeln ansteuerbaren Fördermitteln arrayförmig angeordnet sind, parallel und vertikal zur ersten Ebene beabstandet vorzusehen, wobei die übereinander angeordneten Ebenen fördertechnisch untereinander verbunden sind.

DE 10 2009 017241 A1 offenbart ein Lagersystem gemäß dem Oberbegriff des Anspruchs 1. Unter Lagerhaltung versteht man in Produktion und Logistik eine Aufbewahrung von Material bzw. Gütern, im Folgenden allgemein als Ladeeinheiten bezeichnet, beispielsweise Waren, als Teilaufgabe einer Materialwirtschaft. Lagerung bedeutet dabei eine gewollte Unterbrechung eines betrieblichen Materialflusses, d.h. es entstehen bewusst gebildete Pufferbestände.

Dazu erfordert die Lagerhaltung ein Lagersystem mit einer Lagereinrichtung, in dem bzw. in der die Ladeeinheiten temporär aufbewahrt, d.h. ein- und/oder ausgelagert sowie transportiert, werden können.

Ein solches übliches Lagersystem mit Lagereinrichtung ist beispielsweise ein Hochregallager mit in meist parallelen (Regal-)Reihen strukturiert angeordneten Hochregalen (bzw. kurz nur Regale), in welchen die Ladeeinheiten gelagert werden.

Zwischen jeweils zwei Regalreihen befindet sich eine Gasse (Bedienweg oder auch Gang), über welche die zu lagernden Ladeeinheiten zu ihrem Bestimmungsort im jeweiligen Regal transportiert - und dort ein-/ausgelagert werden. Vereinfacht anschaulich ausgedrückt, die Gassen/Bedienwege trennen die so dann in parallelen Reihen angeordneten Regale und strukturieren so das Hochregallager.

In den Gassen/Gängen/Bedienwegen (im Folgenden meist kurz nur Bedienweg) bewegen sich sogenannte Regalbediengeräte (RBG) (in der Regel pro Bedienweg ein solches RBG), welche z.B. durch Schienen oder Induktion nur in Längsrichtung der jeweiligen Gasse fahren können, d.h. sie sind gassengebundene Fahreinheiten, um so die Ladeeinheiten in die Regale (beiderseits des jeweiligen Bedienwegs/Gasse) - dann mittels integrierter Hebezeuge, beispielsweise einem Hubschlitten, - ein- und/oder auszulagern.

Das Regalbediengerät ist so eine Kombination von gassengebundenem Flurförderzeug und Hebezeug, welcher (gassengebundener) "Flurförderteil" sich in Fahrtrichtung, d.h. Gassen-/Ganglängs- bzw. Bedienwegerichtung, und "Hebezeugteil" bzw. Hubschlitten in Hubrichtung bewegen.

Das Regalbediengerät tritt nie alleine auf, sondern immer in Kombination mit einer/-m sog. Lastaufnahmeeinheit/-mittel, welches die Ladung, d.h. die Ladeeinheiten, direkt oder sog. Ladehilfsmittel, welche dann als Träger der Ladeeinheiten fungieren, quer zum Gang/Bedienweg manipuliert.

Die Bewegung eines RBG erfolgt so in folgenden drei Achsen/Richtungen: x = Bedienweglängsrichtung (Fahreinheit), y = vertikale (Hub-)Richtung (Hebezeug/Hubzeug bzw. Hubschlitten), z = Bedienwegquerrichtung (Lastaufnahmeeinheit).

Jede Gasse hat einen Zufuhr-/Ein- und Auslagerungsbereich (Vorzone), welche meist an Enden (Kopfbereich am Anfang bzw. Ende eines Bedienwegs) angeordnet sind.

Über den Zufuhr-/Einlagerungsbereich eines Bedienwegs werden die Ladeeinheiten angeliefert und dort von dem (den jeweiligen Bedienweg bedienenden) Regalbediengerät zwecks Einlagerns abgeholt. Analog wird an dem Auslagerungsbereich eines Bedienwegs die Ware nach dem Auslagern durch das jeweilige Regalbediengerät abgelegt.

Die Anbindung des Materialflusses (in der/über die Vorzone) in bzw. aus der Lagereinrichtung bzw. dem Hochregallager erfolgt über eine Streckenfördertechnik, beispielsweise eine Elektrobodenbahn, eine Elektrohängerbahn und/oder einen Stetigförderer, welche den Transport der Ladeeinheiten von einem Bearbeitungs- bzw. Arbeitsbereich zu anderen Bearbeitungs- bzw. Arbeitsbereichen und zu den Zufuhr-/Ein- und Auslagerungsbereichen bzw. Vorzonen der Lagereinrichtung bzw. des Hochregallagers bewerkstelligt.

Eine Übergabe der Ladeeinheiten dort, d.h. in den Zufuhr-/Ein- und Auslagerungsbereichen bzw. Vorzonen, von der Streckenfördertechnik an das jeweilige Regalbediengerät eines Bedienwegs erfolgt durch eine weitere Fördertechnik (Übergabefördertechnik), beispielsweise Kettenförderer, angetriebene Rollenbahnen, Schwerkraftrollenbahnen, Hubtische, Drehtische, Umsetzer, fahrerlose Transportfahrzeuge, Verschiebewagen und Vertikalförderer.

Bei dem Bearbeitungs- bzw. Arbeitsbereich erfolgt in der Regel ein weiteres Umlagern/Kommissionieren der Ladeeinheiten, wobei eine weitere oder gegebenenfalls auch mehrere weitere Übergabefördertechniken, wie die Kettenförderer, angetriebene Rollenbahnen, Schwerkraftrollenbahnen, Hubtische, Drehtische, Umsetzer, fahrerlose Transportfahrzeuge, Verschiebewagen und Vertikalförderer, notwendig sind, welche die Übergabe (bzw. die gegebenenfalls mehreren Übergaben) der Ladeeinheiten von der Streckenfördertechnik an den Bearbeitungsbereich bewerkstelligen.

Werden so beim Materialfluss von Ladeeinheiten, d.h. beim Transport der Ladeeinheit von dem Bearbeitungsbereich zu ihrem Regal und dort die Ein-/Auslagerung in/aus ihrem Bestimmungsort im Regal, mehrere verschiedene Fördertechniken, wie Streckenfördertechnik, Übergabefördertechniken, Regalbediengeräte, verwendet bzw. notwendig, so erhöht dies die Komplexität solcher Lagersysteme und macht diese aufwändig und teuer.

Die Streckenfördertechnik, wie die Elektrobodenbahn, die Elektrohängerbahn oder der Stetigförderer, hat insbesondere den Nachteil, dass sie auf Grund ihrer Komplexität teuer ist sowie durch lange und komplexe Streckenführung lange Fahrzeiten bedingt. Insbesondere Stetigförderer besitzen den Nachteil, dass eine Transportzeit von den Ladeeinheiten hoch ist. Ein Handling der Ladeeinheiten (Materialflusshandling) an den Übergabestellen (wie beispielsweise in den Vorzonen von der Streckenfördertechnik über die Übergabefördertechnik auf das Regalbediengerät oder die entsprechende Übergabe von der Streckenfördertechnik an den Bearbeitungsbereich) ist dazu kompliziert.

Der Erfindung liegt die Aufgabe zugrunde, die Nachteile im Stand der Technik zu verbessern, insbesondere ein Lagersystem mit einfachem und (zeit-)effizientem Materialflusshandling vorzusehen. Auch soll das Lagersystem einfach und kostengünstig realisierbar sein.

Die Aufgabe wird durch ein Lagersystem mit einer Lagereinrichtung zum Lagern von Ladeeinheiten und ein Verfahren zum Verlagern von Ladeeinheiten in einem Lagersystem mit den Merkmalen gemäß dem jeweiligen unabhängigen Patentanspruch gelöst.

Bevorzugte Weiterbildungen der Erfindung ergeben sich auch aus den abhängigen Ansprüchen und/oder aus nachfolgenden Erläuterungen. Die Weiterbildungen beziehen sich sowohl auf das Lagersystem als auch auf das Verfahren.

Das Lagersystem weist eine Lagereinrichtung zum Lagern von Ladeeinheiten, beispielsweise auf Paletten angeordnete (Lang-/Flach-)Stückgüter, wie Waren und/oder (Klein-)Teile u.ä., auf.

Die Lagereinrichtung weist weiter zumindest einen ersten Lagerbereich und einen vertikal (y-Richtung) über dem ersten Lagerbereich angeordneten zweiten Lagerbereich auf.

Darüber hinaus kann die Lagereinrichtung selbst vertikal über einen anderen, im Materialfluss der Ladeeinheiten eingebundenem Bereich, wie einem Bearbeitungsbereich für die Ladeeinheiten, liegen.

Dabei kann unter einem "Lagerbereich" ein sich räumlich erstreckender Bereich verstanden werden, welcher zum Lagern von den Ladeeinheiten geeignet ist. Beispielsweise kann ein solcher Lagerbereich ein Teil bzw. Teilbereich eines Hochregallagers sein.

Über eine Hebetechnik bzw. ein oder mehrere - innerhalb der Lagereinrichtung bzw. des ersten und des zweiten Lagerbereichs angeordnete - Hebemittel können die (zumindest zwei) Lagerbereiche aneinander angebunden und so Ladeeinheiten zwischen den (zumindest zwei) Lagerbereichen ausgetauscht werden.

Über diese Hebetechnik bzw. Hebemittel kann/können auch die Lagereinrichtung an den Bearbeitungsbereich (und umgekehrt) bzw. der erste Lagerbereich und der zweite Lagerbereich an den Bearbeitungsbereich (und umgekehrt) angebunden werden.

Der erste Lagerbereich weist eine erste durch erste Bedienwege gebildete Lagerstruktur auf; der zweite Lagerbereich weist eine zweite durch zweite Bedienwege gebildete Lagerstruktur auf.

Vereinfacht ausgedrückt, die Lagerbereiche sind durch ihre jeweiligen Bedienwege strukturiert. D.h., die Struktur eines Lagerbereichs definiert sich durch bzw. über dortige Bedienwege.

Erfindungsgemäß ist eine solche Struktur eine parallele Reihenstruktur von sich jeweils mit (zueinander parallelen) Bedienwegen abwechselnden (zueinander parallelen) Regalreihen ("parallele Lagerreihenstruktur"). Anders ausgedrückt, ein Regalbereich ist durch zueinander parallele Bedienwege durchzogen und bildet so die Lagerstruktur, d.h. die parallele Lagerreihenstruktur, aus.

Unbeschadet dessen können die parallelen Regalreihen (einfach/mehrfach und/oder auch regelmäßig) unterbrochen sein.

Dabei ist ein "Bedienweg" ein sich zumindest annähernd geradlinig verlaufender, sich in Längsrichtung (x-Richtung) ersteckender Weg/Pfad, auf dem sich (in der Längs- bzw. x-Richtung) - im Allgemeinen - ein Bediensystem/- mittel, beispielsweise eine mobile Einheit, bewegen kann.

Erfindungsgemäß ist so ein Bedienweg in einem Lagerbereich ein - weitestgehend horizontal (Horizontalebene) verlaufender - Gang und/oder eine Gasse, welcher jeweils in seiner Querrichtung (z-Richtung) beiderseits durch Regaleinheiten begrenzt wird. Das Bediensystem/-mittel kann insbesondere ein Transport- und/oder Hubmittel für die Ladeeinheit sein, beispielsweise ein Flurfördermittel und/oder Hebezeug, wie ein RGB.

Somit kann ein durch Bedienwege strukturierter Lagerbereich ein eine parallele Lagerreihenstruktur aufweisender Lagerblock sein.

Verlaufen bzw. liegen die Bedienwege mit ihrer x-/Längs-Richtung in der horizontalen Ebene, so stellt sich die Lagerstruktur - vereinfacht ausgedrückt - als bezüglich der Horizontalebene flächige (Lager-)Struktur, d.h. als eine Flächenstruktur, dar.

Damit sich ein solches Bediensystem/-mittel in einem Bedienweg bewegen kann, beispielsweise ein kombiniertes Flurförder-Hebe-Mittel in einer Regalgasse, kann ein induktives Schienensystem in/auf dem Bedienweg/Gasse angeordnet sein.

Eine erste Ausrichtung der ersten Lagerstruktur ist zu einer zweiten Ausrichtung der zweiten Lagerstruktur verdreht. Dabei kann unter Ausrichtung einer Lagerstruktur eine (x-/Längs-)Richtung der die Lagerstruktur definierenden Bedienwege des/im Lagerbereich sein.

Vereinfacht und anschaulich ausgedrückt, die Ausrichtung einer parallelen Lagerreihenstruktur ist bzw. definiert sich durch die x-/Längsrichtung der parallelen Lagergassen bzw. Bedienwege.

Die x-/Längsrichtung der Bedienwege im bzw. des ersten Lagerbereichs ist so dann gegen die x-/Längsrichtung der Bedienwege im bzw. der zweiten Lagerbereichs (um einen vorgebbaren Winkel) verdreht. Die Verdrehung kann beispielsweise ca. 90° aufweisen. Andere Verdrehungswinkel, wie 30°, 45°, 60° oder 75° - oder auch dazwischen liegende Winkel - sind möglich.

Anders ausgedrückt, weisen der erste und der zweite Lagerbereich seine erste bzw. zweite Flächenstruktur auf, so sind diese beiden Flächenstrukturen gegeneinander (um die Normale zur Fläche/Horizontalebene) gedreht, beispielsweise um 90° gedreht.

Kurz zusammenfassend und vereinfacht ausgedrückt, das Lagersystem sieht eine Lagereinrichtung mit zumindest zwei vertikal übereinander angeordnete/liegende und verdreht zueinander angeordnete Lagerbereiche vor.

Entsprechend dieses "zweistöckigen" Aufbaus mit zumindest zwei vertikal übereinander angeordnete/liegende und verdreht zueinander angeordnete Lagerbereiche, können auch mehrere solcher Lagerbereiche vertikal übereinander angeordnet sein, beispielsweise drei, vier, fünf oder noch mehr, deren jeweilige Lagerbereiche gegeneinander verdreht sind.

Durch eine Hebetechnik, beispielsweise ein Hubmittel, können dann die zumindest zwei Lagerbereiche (entsprechend so auch bei den mehreren vertikal übereinander angeordneten Lagerbereiche) aneinander angebunden werden.

Beim Verlagern der Ladeeinheiten in dem Lagersystem (mit der Lagereinrichtung mit den zumindest zwei vertikal übereinander angeordneten/liegenden und verdreht zueinander angeordneten Lagerbereichen) wird eine Ladeeinheit in einem der zwei Lagerbereiche des Lagersystems ein- oder ausgelagert und in diesem Lagerbereich transportiert. Die Ladeeinheit wird aus diesem einen Lagerbereich in den anderen Lagerbereich übergeben, beispielsweise mittels der Hebetechnik, - und die Ladeeinheit wird in dem anderen Lagerbereich, wohin sie übergeben wurde, transportiert.

Dieser Transport im anderen Lagerbereich kann an einen - innerhalb des anderen Lagerbereichs liegenden - Ziel-/Bestimmungsort erfolgen, beispielsweise an einen Übergabeort, wo mittels eines anderen Fördersystems eine Übergabe der Ladeeinheit unmittelbar an/in einen Arbeits-/Bearbeitungsbereich erfolgt.

So kann beispielsweise ein Bediensystem/-mittel eine Ladeeinheit (für den durch eine x-/y-Zielkoordinate bestimmten Ziel-/Bestimmungsort) aus einer Aufnahmeeinheit im ersten Lagerbereich entnehmen, transportiert sie auf einem ersten Bedienweg im ersten Lagerbereich schon in Richtung ihres Ziel-/Bestimmungsortes (x-Zielkoordinate), übergibt sie an den zweiten Lagerbereich, wo ein dortiges Bediensystem/-mittel die Ladeeinheit weiter in Richtung ihres Ziel-/Bestimmungsortes (y-Zielkoordinate) transportiert.

Dort kann dann die Ladeeinheit an ein anderes Fördermittel übergeben werden, beispielsweise an ein Hebezeug, welches die Ladeeinheit (am Ziel-/Bestimmungsort) in den - beispielsweise vertikal unterhalb der Lagereinrichtung bzw. des anderen Lagerbereichs liegenden - Arbeits-/Bearbeitungsbereich übergibt.

Dabei kann diese Übergabe von Ladeeinheiten - von jeweils einem Lagerbereich in den jeweils anderen Lagerbereich (und dortiges Transportieren) - auch mehrfach erfolgen. Auch kann der Verlagerungsvorgang (entsprechend umgekehrt) in umgekehrter Richtung/Abfolge - dann insbesondere beginnend im Bearbeitungs-/Arbeitsbereich erfolgen.

Sind die zwei Lagerstrukturen der zwei vertikal übereinander liegenden Lagerbereiche gegeneinander verdreht, so geht damit die Erfindung von der Idee bzw. Überlegung aus, dass durch diese zwei vertikal übereinander, verdreht zueinander angeordneten Lagerbereiche - über deren erste und zweite Bedienwege und einem möglichen Wechsel/Übergabe von Ladeeinheiten zwischen den zwei Lagerbereichen und jeweils möglichen Transport der Ladeeinheiten in/auf den jeweiligen Bedienwegen der zwei Lagerbereiche (in verdreht ausgerichteten Bedienwegestrukturen) - jede Zielkoordinate (x/y) im Lagersystem "angefahren" werden kann.

Vereinfacht ausgedrückt, das Lagersystem deckt mit ihrer zweiteiligen, verdreht angeordneten Struktur den Raum im Lagersystem komplett ab. Jeder Punkt in diesem Raum des Lagersystems ist - zur Ein-/Auslagerung von den Ladeeinheiten - durch die Bediensysteme/-mittel - anfahrbar.

Eine flexible Verteilung der Ladeeinheiten gleich innerhalb der Lagersystems wird somit möglich. Die Lagereinrichtung, beispielsweise ein die zwei vertikal übereinander und verdreht liegenden Lagerbereiche aufweisender Lagerblock, kann so nicht nur zur Lagerung der Ladeeinheiten, sondern auch gleich zu deren Verteilung genutzt werden.

Die Erfindung kann so auf verschiedene, sonst notwendige Fördersysteme im Materialfluss, wie die Streckenfördertechnik, beispielsweise auf die Elektrobodenbahnen, die Elektrohängebahnen und/oder Stetigförderer, oder Übergabefördertechniken verzichten, ermöglicht sie aufgrund der verdrehten Ausrichtung der zwei Lagerstrukturen "ihrer" zwei Lagerbereiche zugleich auch die (flächendeckende/-abdeckende) Verteilung der Ladeeinheiten im (gesamten) Lagersystem.

Das Bediensystem/-mittel, wie beispielsweise die Kombination von (gassengebundenem) Flurförderzeug und Hebezeug, übernimmt hier dann sowohl die Funktion von herkömmlichen RBG als auch der Streckenfördertechnik.

Somit schafft die Erfindung ein Lagersystem mit einfachem und (zeit-)effizientem Materialfluss bzw. Materialflusshandling, welches Lagersystem darüber hinaus einfach und kostengünstig realisierbar ist.

Nach der Erfindung ist so ein Bediensystem/-mittel mit ersten (für den ersten Lagerbereich) und zweiten (für den zweiten Lagerbereich) Bedieneinheiten, beispielsweise kombinierte Flurförder-Hebe-Mittel, auch im Folgenden als Shuttle bezeichnet, zum Verlagern und/oder Aus-/Einlagern der Ladeeinheiten in der Lagereinrichtung bzw. in dem ersten und dem zweiten Lagerbereich vorgesehen.

Das Bediensystem/-mittel bzw. die ersten (für den ersten Lagerbereich) und zweiten (für den zweiten Lagerbereich) Bedieneinheiten bzw. die Shuttle können sich mittels/auf einer Wegetechnik, wie eines bzw. auf einem Schienensystem, im Speziellen eines bzw. auf einem induzierten Schienensystem, in/auf den ersten/zweiten Bedienwegen in der Lagereinrichtung bzw. in dem ersten und zweiten Lagerbereich bewegen.

Weiter bevorzugt kann hier vorgesehen sein, dass das Shuttle zu einem Ein-/Auslagern der Ladeeinheiten in/aus Aufnahmeeinheiten, beispielsweise ein Regal, der Lagereinrichtung sowie zu einem Transport der Ladeeinheiten auf den ersten und/oder zweiten Bedienwegen eingerichtet ist. Entsprechende Mittel/Einheiten, wie eine Aktuatorik und/oder Motorik und/oder Elektrik/Elektronik und/oder Steuerung, ist an dem Shuttle dann dafür vorgesehen.

Nach einer bevorzugten Weiterbildung ist mindestens eine Hebevorrichtung, beispielsweise ein Hubmittel bzw. Hubeinrichtung (ähnlich eines Aufzugs), kurz im Folgenden auch nur als Heber bezeichnet, für die Ladeeinheiten vorgesehen, durch welche der erste und der zweite Lagerbereich aneinander angebunden sind.

D.h., mittels eines solchen Hubmittels kann eine Ladeeinheit von dem einen Lagerbereich an den anderen Lagerbereich (und wieder zurück) übergeben werden.

Erfindungsgemäß ist ein Bearbeitungsbereich bzw. Arbeitsbereich für die Ladeeinheiten vorgesehen, welcher insbesondere vertikal unterhalb (oder oberhalb) der Lagereinrichtung angeordnet ist. Vereinfacht ausgedrückt, hier werden (mindestens) drei Ebenen realisiert mit (im Falle des unten liegenden Arbeits-/Bearbeitungsbereich) der untersten Ebene als die Arbeits-/Bearbeitungsebene, einer ersten darüberliegenden Ebene als den ersten unteren Lagerbereich und einer zweiten obersten Ebene als den zweiten oberen Lagerbereich. Weitere Ebenen als entsprechende Lagerbereiche und/oder Arbeits-/Bearbeitungsbereiche können vorgesehen sein. Hierdurch lässt sich ein kompaktes, effizient strukturiertes und leicht zu bedienendes "Warehouse" kostengünstig realisieren

In dem Bearbeitungs- bzw. Arbeitsbereich kann ein weiteres Umlagern/Kommissionieren der Ladeeinheiten erfolgen.

Nach der Erfindung ist mindestens eine Hebevorrichtung, kurz auch nur als Heber bezeichnet, für die Ladeeinheiten vorgesehen, durch welche die Lagereinrichtung an den Bearbeitungs-/Arbeitsbereich angebunden ist.

Besonders zweckmäßig ist es hier, wenn diese Hebevorrichtung sowohl den ersten Lagerbereich und den zweiten Lagerbereich an den Bearbeitungsbereich - ähnlich eines "gemeinsamen Aufzugs" - anbindet. Somit können Ladeeinheiten beliebig in/an verschiedenen Ebenen des Lagersystems - der erste und der zweite Lagerbereich sowie der Arbeitsbereich, sind diese vertikal "geschichtet" angeordnet stellen so eine Ebene in dem Lagersystem dar - übergeben werden.

Insbesondere können auch mehrere bzw. auch eine Vielzahl von solchen Hebevorrichtungen vorgesehen sein, welche in etwa gleichmäßig über die Lagereinrichtung verteilt sind. Deren Verteilung kann auch in Abhängigkeit von einem Materialfluss von den Ladeeinheiten in der Lagereinrichtung erfolgen.

Nach einer weiteren bevorzugten Weiterbildung ist vorgesehen, dass die Verdrehung der ersten zu der zweiten Ausrichtung ungefähr 90° beträgt. Hierdurch lässt sich auf einfache Weise die größtmögliche Flächenabdeckung bei geringster Streckenführungslänge erreichen.

Insbesondere kann auch bevorzugt vorgesehen sein, dass die erste Lagerstruktur durch die ersten Bedienwege getrennte, in parallelen Reihen angeordnete Regallagereinheiten und/oder die zweite Lagerstruktur durch die zweiten Bedienwege getrennte, in parallelen Reihen angeordnete Regallagereinheiten aufweisen/aufweist.

Weiterhin kann auch vorgesehen sein, dass die Lagereinrichtung blockförmig ausgebildet ist, beispielsweise als Teil eines "Warehouses" mit einem über zwei Ebenen verteilten Hochregallager. Der Bearbeitungs-/Arbeitsbereich kann weiter dann zweckmäßiger Weise als unterste Ebene in dem "Warehouse" integriert sein. Die Hebevorrichtungen können sich dann vertikal über das "Warehouse" erstrecken - und so die Übergabe von Ladeeinheiten in/an alle Ebenen bewerkstelligen.

Die Ladeeinheit kann dabei eine mit Gütern beladbare oder beladene Palette sein.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale wird der Fachmann jedoch zweckmäßigerweise auch einzeln betrachten und zu sinnvollen weiteren Kombinationen zusammenfassen.

Die oben beschriebenen Eigenschaften, Merkmale und Vorteile dieser Erfindung, sowie die Art und Weise, wie diese erreicht werden, werden klarer und deutlicher verständlich im Zusammenhang mit der folgenden Beschreibung von einem oder mehreren Ausführungsbeispielen, das bzw. die im Zusammenhang mit den Figuren näher erläutert wird bzw. werden.

Die Erfindung ist jedoch nicht auf die in dem bzw. den Ausführungsbeispielen angegebene Kombination von Merkmalen beschränkt, auch nicht in Bezug auf funktionale Merkmale. So können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht werden.

Funktions-/bauartgleiche bzw. identische Elemente oder Komponenten weisen in den Ausführungsbeispielen bzw. Figuren gleiche Bezugszeichen auf. Es zeigen:

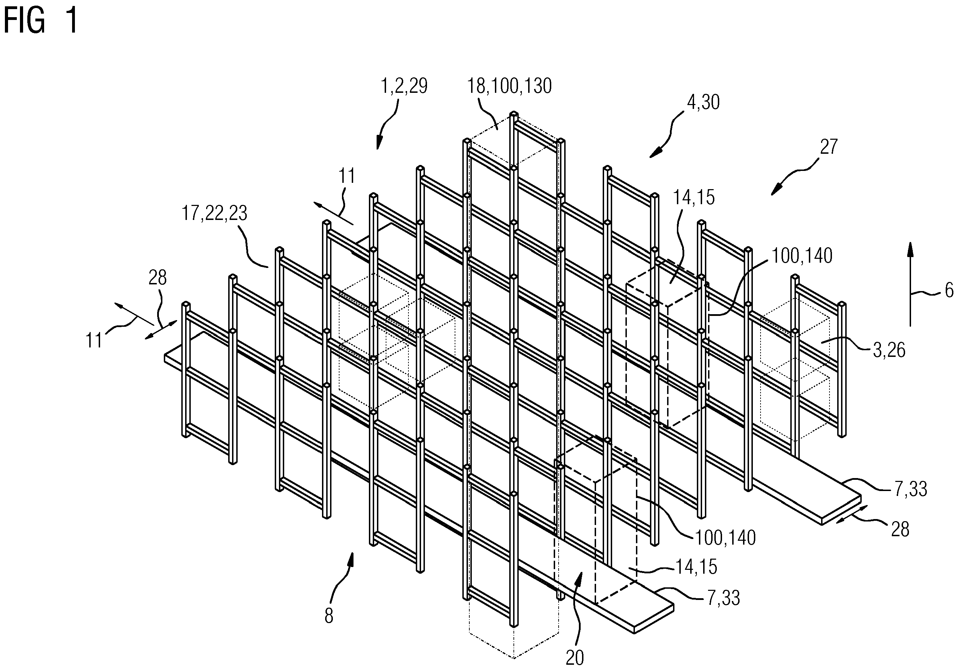

- FIG 1: einen schematisch, räumlich dargestellten Ausschnitt (untere Ebene) eines Aufbaus eines Warehouse mit einem dortigen blockförmigen Lagersystem zur Lagerung von mit Stückgut bestückten Paletten gemäß einem Ausführungsbeispiel,

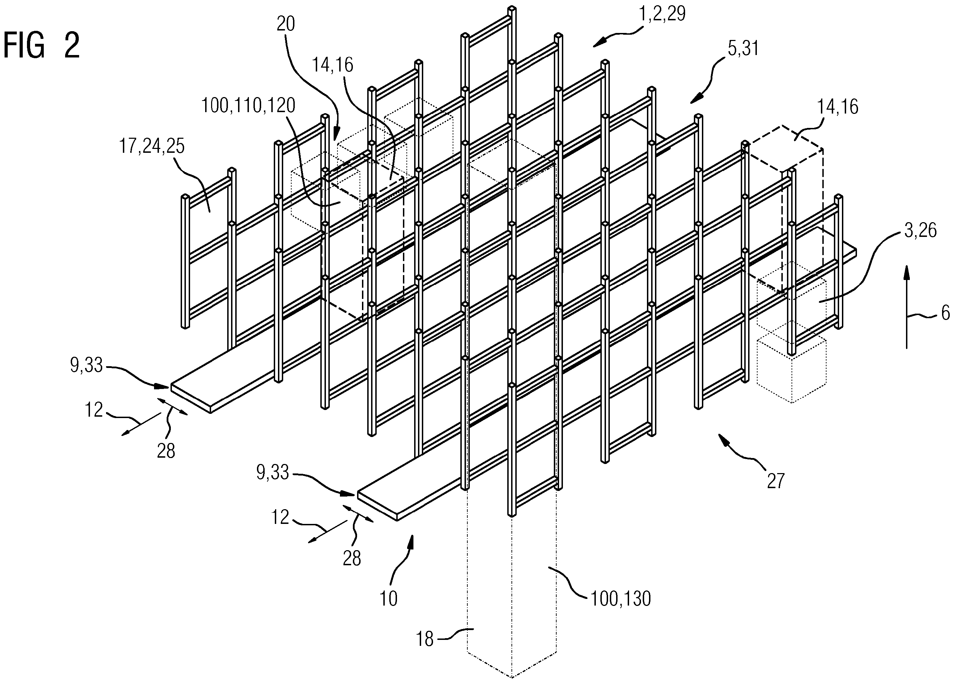

- FIG 2: einen weiteren schematisch, räumlich dargestellten Ausschnitt (obere Ebene) eines Aufbaus eines Warehouse mit einem dortigen blockförmigen Lagersystem zur Lagerung von mit Stückgut bestückten Paletten gemäß einem Ausführungsbeispiel,

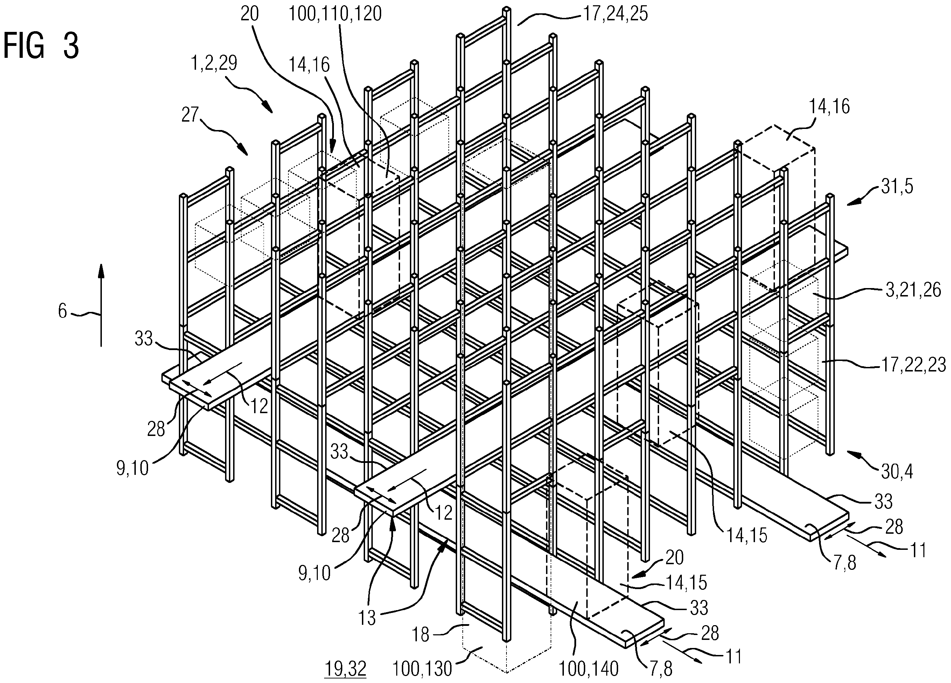

- FIG 3: einen schematisch, räumlich dargestellten - aus den Ausschnitten nach den FIG.en 1 und 2 (untere und obere Ebene) zusammengefügten - Ausschnitt eines Aufbaus eines Warehouse mit einem dortigen blockförmigen Lagersystem zur Lagerung von mit Stückgut bestückten Paletten gemäß einem Ausführungsbeispiel,
- FIG 4: eine Seitenansicht auf das Lagersystem nach den FIG.en 1 bis 3 zur Lagerung von mit Stückgut bestückten Paletten gemäß einem Ausführungsbeispiel,
- FIG 5: eine Draufsicht auf das Lagersystem nach den FIG.en 1 bis 3 zur Lagerung von mit Stückgut bestückten Paletten gemäß einem Ausführungsbeispiel,
- FIG 6: eine Draufsicht auf eine erste, untere Ebene des Lagersystems nach den FIG.en 1 bis 5 zur Lagerung von mit Stückgut bestückten Paletten gemäß einem Ausführungsbeispiel und
- FIG 7: eine Draufsicht auf eine zweite, obere Ebene des Lagersystems nach den FIG.en 1 bis 5 zur Lagerung von mit Stückgut bestückten Paletten gemäß einem Ausführungsbeispiel.

### "CrissCross" - Lagersystem (FIG.en 1 bis 7)

### - Aufbau "CrissCross" - Lagersystem 1

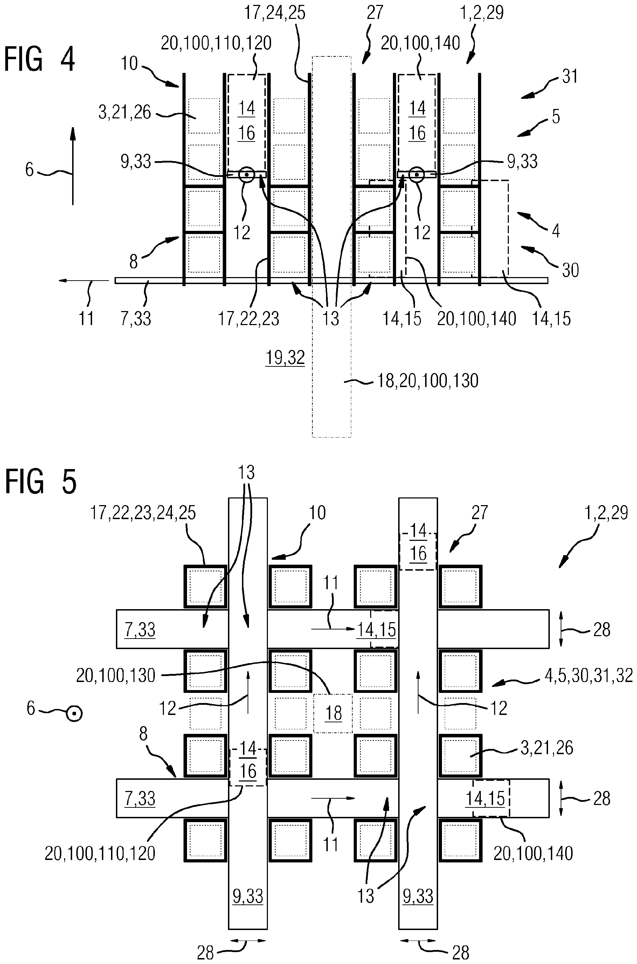

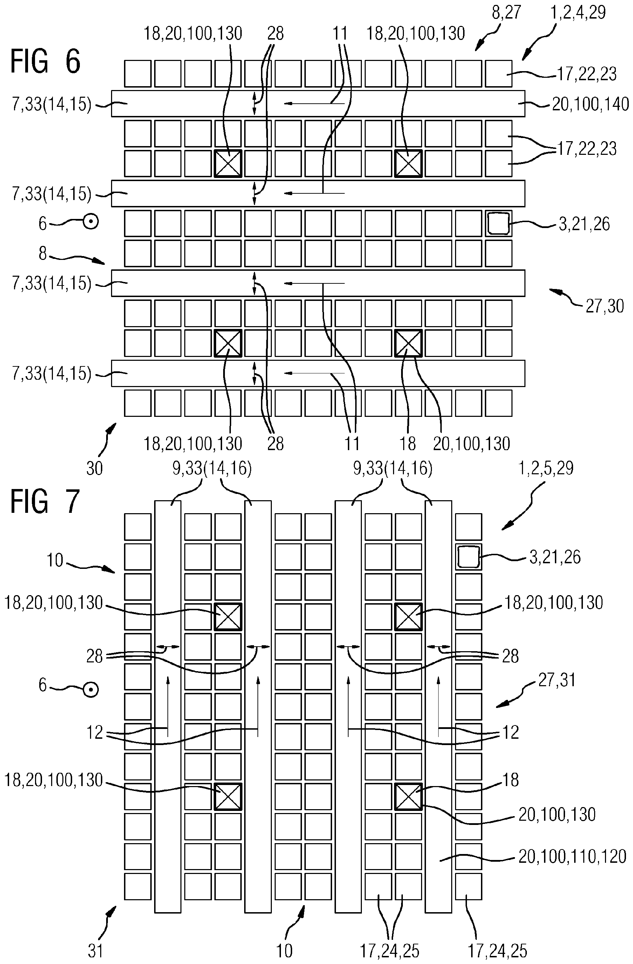

FIG.en 1 bis 3 zeigen schematisch in räumlicher Darstellung einen Aufbau eines Warehouse 29 mit einem dortigen blockförmigen Lagersystem 1, im Folgenden als CrissCross - Lagersystem 1, bezeichnet, zur Lagerung von mit Stückgut 26 bestückten Paletten 3. Die FIG.en 4 bis 5 verdeutlichen schematisch den Aufbau dieses CrissCross - Lagersystems 1 in Seitenansicht (FIG 4) und Draufsicht (FIG 5). Die FIG. 6 bis 7 zeigen eine Draufsicht auf eine erste, untere Ebene 30 (FIG 6) bzw. auf eine zweite, obere Ebene 31 (FIG 7) bei dem CrissCross - Lagersystem 1.

Dieses CrissCross - Lagersystem 1 umfasst eine über die zwei Ebenen 30, 31 verteilte (Hochregal-)Lagereinrichtung 2. D.h., die (Hochregal-)Lagereinrichtung 2 ist in der ersten, unteren Ebene 30 sowie in der zweiten, vertikal 6 über der ersten, unteren Ebene 30 angeordneten oberen Ebene 31 angeordnet. Jede der beiden Ebenen 30, 31 umfasst, wie die FIG.en 1 bis 3 im Detail zeigen, einen blockförmigen Lagerbereich 4, 5 zur Lagerung der Paletten 3.

D.h., in der unteren, erste Ebene 30 ist ein erster Lagerbereich 4 mit in Reihen 22 angeordneten Hochregallagern/Hochregalen 17, 23 angeordnet; in der vertikal 6 darüberliegenden oberen, zweiten Ebene 31 ist ein zweiter Lagerbereich 5 mit ebenfalls in Reihen 24 angeordneten Hochregallagern/Hochregalen 17, 25 angeordnet.

Die Hochregale bzw. -lager 17, 23, 25 in den zwei Ebenen 30, 31 weisen parallele Regalstrukturen 8, 10 mit den (parallelen) Regalreihen 22, 24 bzw. mit durch parallele Lagergassen 7, 9 durchzogene Regalreihen 22, 24 zur Aufnahme der Paletten 3 auf.

Im Warehouse 29 unterhalb der Lagereinrichtung 2 des CrissCross - Lagersystems 1 ist - als Grund- bzw. unterste Ebene 32 - ein Bearbeitungsbereich 19 angeordnet, in welchem die - im oberen Teil/Ebenen 30, 31 des Warehouses 29 bzw. in der Lagereinrichtung 2 des CrissCross - Lagersystems 1 zu lagernden und dort Bodenlasten 21 bewirkende - Paletten 3 (im Materialfluss 20 der Paletten 3) bearbeitet werden.

Wie die FIG.en 1 bis 7 zeigen werden die zwei Lagerbereiche 4, 5 bzw. deren Hochregallager 17, 23, 25 jeweils durch eine blockförmige Gestellstruktur 27 bzw. blockförmiges Gestell 27 gebildet, welches die (Hoch-)Regale 17, 23, 25 zur Aufnahme und Lagerung der Paletten 3 - strukturiert (Lagerstrukturen 8, 10) in die parallelen, mit (parallelen) Lagergassen 7, 9 durchzogenen Lagerreihen 22, 24 - beherbergt.

Dabei sind, wie die FIG.en 1 bis 7 verdeutlichen, die (parallelen) Lagergassen 7 des (ersten, unteren) Lagerbereichs 4 der unteren, ersten Lagerebene 30 um ca. 90° (um die Vertikale 6) gegen die (parallelen) Lagergassen 9 des (zweiten, oberen) Lagerbereichs 5 der oberen, zweiten Ebene 31 verdreht 13 ausgerichtet 11, 12.

Vereinfacht ausgedrückt, die Längsrichtungen 11 der Lagergassen 7 in der ersten, unteren Ebene 30 bzw. im ersten, unteren Lagerbereich 4 (erste Lagerstruktur 8) sind um ca. 90° um die Vertikale 6 zu den Längsrichtungen 12 der Lagergassen 9 in der zweiten, oberen Ebene 31 bzw. im zweiten, oberen Lagerbereich 5 (zweite Lagerstruktur 10) verdreht 13.

D.h., das CrissCross - Lagersystem 1 sieht zwei vertikal 6 übereinander angeordnete/liegende und um ca. 90° verdreht 13 zueinander angeordnete Lagerbereiche 4, 5 mit jeweils paralleler Lagergassen-Lagerreihen-Struktur 11, 22, 23, 12, 24, 25 vor.

Die Anbindung der zwei Lagerbereiche 4, 5 untereinander sowie dieser mit dem (in unterster Ebene 32 liegenden) Bearbeitungsbereich 19 erfolgt, wie die FIG.en 1 bis 7 verdeutlichen, mittels mehrerer vertikaler 6, sich über alle Ebenen 30, 31, 32, d.h. Bearbeitungsbereich 19 in unterster Ebene 32, untere, erste Ebene 30 und obere, zweite Ebene 31, erstreckenden Heber 18.

Die mehreren Heber 18, gezeigt ist in den FIG.en 1 bis 5 beispielhaft nur ein Heber 18, FIG.en 6 bis 7 zeigen beispielhaft vier Heber, verteilen sich dabei annähernd regelmäßig in dem CrissCross - Lagersystem 1. Dabei können für die Realisierung der Verteilstruktur der Heber 18 im CrissCross - Lagersystem auch der Materialfluss 20 der Paletten 3 berücksichtigt werden.

Der Materialfluss 20 bzw. das Materialflusshandling 20, d.h. hier das Transportieren der Paletten 3 im CrissCross - Lagersystem 1 (in den Lagergassen 7, 9) sowie das Ein- und Auslagern der Paletten 3 in/aus den Regalen 17, 23, 25 des Criss Cross - Lagersystems 1 erfolgt - neben den Hebern 18 - mittels eines in den Lagergassen 7, 9 operierenden Bediensystems 14, d.h. hier mittels sich in den Lagergassen 7, 9 bewegenden Shuttle 15 (im ersten, unteren Lagerbereich 4 bzw. in den ersten Lagergassen 7), 16 (im zweiten, oberen Lagerbereich 5 bzw. in den zweiten Lagergassen 9).

Dabei ist pro Lagergasse 7, 9 ein solches Shuttle 15, 16, welches eine Kombination von Flurfördermittel (zur Bewegung in Längsrichtung 11, 12 der jeweiligen Lagergasse 7, 9) und Hebezeug (zum Anheben/Absenken der zu lagernden Palette 3 vor dem zur Aufnahme der Palette 3 vorgesehenen Regal 17, 23, 25 und zum Einschieben/Herausholen der zu lagernden Palette 3 ins Regal 17, 23, 25 in Querrichtung 28) darstellt, vorgesehen.

Die Bewegung der Shuttle 15, 16 erfolgt jeweils mittels eines in den jeweiligen Lagergassen 7, 9 installierten induzierten Schienensystems 33.

### - Verlagern (100, 110, 120, 130, 140) von Ladeeinheiten/Paletten 3 im "CrissCross" - Lagersystem 1

Beim Verlagern 100, 110, 120, 130, 140 einer Palette 3 im CrissCross - Lagersystem 1, beispielsweise bei einem Auslagern 110 einer Palette 3 aus einem Regal 17, 25 in der oberen, zweite Ebene 31 bzw. im oberen, zweiten Lagerbereich 5 im CrissCross - Lagersystem 1 (vgl. FIG.en 2 bis 7), wird die Palette 3 mittels des in der jeweiligen, das Regal 17, 25 beherbergenden Lagergasse 9 agierenden Shuttles 16 die Palette 3 aus dem Regal 17, 25 entnommen 110.

Das Shuttle 16 transportiert 120 dann die entnommene Palette 3 in seiner Lagergasse 9 schon in Richtung x-Zielkoordinate - zum dort nächst liegenden Heber 18 (vgl. FIG.en 2 bis 7).

Über den Heber 18 wird die Palette 3 an die erste, untere Ebene 30 bzw. an den ersten, unteren Lagerbereich 4 übergeben 130 (vgl. FIG.en 1 bis 7), wo sie vom dort - in der entsprechenden Lagergasse 7 des Hebers 18 - agierenden Shuttle 15 aufgenommen wird.

Dieses Shuttle 15 des unteren, ersten Lagerbereichs 4 kann mit der Palette 3 die y-Zielkoordinate anfahren 140 und an den dortigen Heber 18 die Palette 3 übergeben (vgl. FIG.en 1 bis 7).

Dieser Heber 18 fördert die Palette 3 dann in den Bearbeitungsbereich 19 in der untersten Ebene 32, wo sie von einer anderen Fördertechnik übernommen wird (vgl. FIG.en 3 bis 5).

Zur Einlagerung 110 einer Palette 3 - der Materialfluss 20 verläuft hier umgekehrt vom Bearbeitungsbereich 19 zum (Ziel-)Regal 17, 25 - wird der Vorgang entsprechend umgekehrt durchlaufen (140, 130, 120, 110, 100).

Sind die zwei Lagerstrukturen 8, 10 der zwei vertikal 6 übereinander liegenden Lagerbereiche 4, 5 des CrissCross - Lagersystems 1 unterschiedlich ausgerichtet, wie hier um ca. 90° gegeneinander verdreht 13, so kann das CrissCross - Lagersystem 1 eine flexible Verteilung der Paletten 3 gleich innerhalb des Lagersystems ermöglichen. Das CrissCross - Lagersystem 1 kann so nicht nur zur Lagerung der Paletten 3, sondern auch gleich zu deren Verteilung genutzt werden.

Obwohl die Erfindung im Detail durch das bzw. die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Lagersystem (1) mit einer Lagereinrichtung (2) zum Lagern von Ladeeinheiten (3), wobei
- die Lagereinrichtung (2) zumindest einen ersten Lagerbereich (4) und einen vertikal (6) über dem ersten Lagerbereich (4) angeordneten zweiten Lagerbereich (5) aufweist, **dadurch gekennzeichnet, dass**
- der erste Lagerbereich (4) eine erste durch erste horizontale Bedienwege (7) gebildete Lagerstruktur (8) und der zweite Lagerbereich (5) eine zweite durch zweite horizontale Bedienwege (9) gebildete Lagerstruktur (10) aufweist, so dass eine solche Lagerstruktur eine parallele Reihenstruktur von sich jeweils mit zueinander parallelen Bedienwegen abwechselnd zueinander parallelen Regalreihen aufweist,
- wobei jeder Bedienweg in einem Lagerbereich ein Gang und/oder eine Gasse ist, welcher jeweils in seiner Querrichtung beiderseits durch Regaleinheiten der jeweiligen Regalstruktur begrenzt wird und wobei jeder Bedienweg ein sich zumindest annähernd gradlinig verlaufender, sich in Längsrichtung erstreckender Weg ist, auf dem sich ein Bediensystem/-mittel bewegt;
- wobei das Bediensystem/-mittel mit ersten für den ersten Lagerbereich (4) und zweiten für den zweiten Lagerbereich ausgestalteten Bedieneinheiten ausgerüstet ist, welches jeweils in Form eines kombinierten Flurförder-Hebe-Mittels (16) zum Verlagern und/oder Aus/Einlagern der Ladeeinheiten in dem ersten und dem zweiten Lagerbereich (4 bzw. 5) ausgebildet ist und auch als Shuttle (16) bezeichenbar ist;
und
- eine erste Ausrichtung (11) der ersten Lagerstruktur (8) zu einer zweiten Ausrichtung (12) der zweiten Lagerstruktur (10) verdreht (13) ist;
- wobei das Lagersystem (1) einen Bearbeitungsbereich (19) für die Ladeeinheiten (3) umfasst, welcher vertikal (6) unter der Lagereinrichtung (2) angeordnet ist;
- und wobei das Lagersystem mindestens eine Hebevorrichtung (18) für die Ladeeinheiten (3) umfasst, welche auch als Heber bezeichenbar ist und durch welche der erste Lagerbereich (4) und der zweite Lagerbereich (5) an den Bearbeitungsbereich (19) angebunden sind; und
- wobei das Shuttle (16) die Ladeeinheiten in seinen Bedienwegen (9) zum dort nächstliegenden Heber (18) transportiert.

2. Lagersystem (1) nach Anspruch 1, gekennzeichnet mit einem Bediensystem (14) zum Verlagern der Ladeeinheiten (3) in der Lagereinrichtung (2), wobei das Bediensystem (14) in den ersten Bedienwegen (7) sich bewegende erste Bedieneinheiten (15) und in den zweiten Bedienwegen (9) sich bewegende zweite Bedieneinheiten (16) aufweist.

3. Lagersystem (1) nach mindestens dem voranstehenden Anspruch, **dadurch gekennzeichnet, dass**
die ersten und/oder zweiten Bedieneinheiten (15, 16) zu einen Ein-/Auslagern der Ladeeinheiten (3) in/aus Aufnahmeeinheiten (17) der Lagereinrichtung sowie zu einen Transport der Ladeeinheiten (3) auf den ersten und/oder zweiten Bedienwegen eingerichtet (7, 9) sind.

4. Lagersystem (1) nach mindestens einem der voranstehenden Ansprüche, gekennzeichnet mit
mindestens einer Hebevorrichtung (18) für die Ladeeinheiten (3), durch welche der erste und der zweite Lagerbereich (4, 5) aneinander angebunden sind.

5. Lagersystem (1) nach mindestens einem der Ansprüche 1 oder 4, **gekennzeichnet durch**
mehrere Hebevorrichtungen (18), welche in etwa gleichmäßig über die Lagereinrichtung (2) verteilt sind und/oder welche in Abhängigkeit von einem Materialfluss (20) von den Ladeeinheiten (3) in der Lagereinrichtung (2) verteilt sind.

6. Lagersystem (1) nach mindestens einem der voranstehenden Ansprüche, **dadurch gekennzeichnet, dass**
die Verdrehung (13) der ersten zu der zweiten Ausrichtung (11, 12) ungefähr 90° beträgt.

7. Lagersystem (1) nach mindestens einem der voranstehenden Ansprüche, **dadurch gekennzeichnet, dass**
die erste Lagerstruktur (8) durch die ersten Bedienwege (7) getrennte, in parallelen Reihen (22) angeordnete Regallagereinheiten (23) und/oder die zweite Lagerstruktur (10) durch die zweiten Bedienwege (9) getrennte, in parallelen Reihen (24) angeordnete Regallagereinheiten (25) aufweisen/aufweist.

8. Lagersystem (1) nach mindestens einem der voranstehenden Ansprüche, **dadurch gekennzeichnet, dass**
die Lagereinrichtung (2) blockförmig ausgebildet ist und/oder die Ladeeinheit (3) eine mit Gütern (26) beladbare oder beladene Palette (3) ist.

9. Verfahren (100) zum Verlagern von Ladeeinheiten (3) in einem Lagersystem (1) nach mindestens einem der voranstehenden Ansprüche, bei dem
- eine Ladeeinheit (3) in einem der zwei Lagerbereiche (4, 5) des Lagersystems (1) ein- oder ausgelagert (110) und in diesem Lagerbereich (4, 5) transportiert (120) wird,
- die Ladeeinheit (3) aus dem einen Lagerbereich (4, 5) in den anderen Lagerbereich (4, 5) übergeben (130) wird und
- die Ladeeinheit (3) in dem anderen Lagerbereich (4, 5) transportiert (140) wird.

## Claims

1. Storage system (1) having a storage arrangement (2) for storing loading units (3), wherein
- the storage arrangement (2) has at least one first storage region (4) and one second storage region (5) arranged vertically (6) above the first storage region (4), **characterised in that**
- the first storage region (4) has a first storage structure (8), which is formed by first horizontal storage and retrieval routes (7) and the second storage region (5) has a second storage structure (10), which is formed by second horizontal storage and retrieval routes (9), so that such a storage structure is a parallel rack structure of respective rows of racks parallel to each other alternating with storage and retrieval routes parallel to each other,
- wherein each storage and retrieval route is a passageway and/or an aisle in a storage region which is respectively delimited on both sides by rack units in the respective rack structure in its transverse direction and wherein each storage and retrieval route is an at least approximately rectilinear route extending in a longitudinal direction via which an operating system/resource moves;
- wherein the operating system/resource is equipped with first operating units embodied for the first storage region (4) and second operating units for the second storage region, which in each case is embodied in the form of a combined floor-level conveyor-hoist (16) for shifting and/or retrieving/storing the loading units in the first and the second storage area (4 and 5) and also can be referred to as a shuttle (16);
and
- a first orientation (11) of the first storage structure (8) is rotated (13) in relation to a second orientation (12) of the second storage structure (10);
- wherein the storage system (1) comprises a processing area (19) for the loading units (3), which is arranged vertically (6) below the storage arrangement (2);
- and wherein the storage system comprises at least one lifting device (18) for the loading units (3), which can also be referred to as a lift and by means of which the first storage region (4) and the second storage region (5) are connected to the processing area (19); and
- wherein the shuttle (16) transports the loading units in its storage and retrieval routes (9) to the nearest lift (18).

2. Storage system (1) according to claim 1, **characterised by** an operating system (14) for shifting the loading units (3) in the storage arrangement (2), wherein the operating system (14) has first operating units (15) moving in the first storage and retrieval routes (7) and second operating units (16) moving in the second storage and retrieval routes (9).

3. Storage system (1) according to at least the preceding claim, **characterised in that**
the first and/or second operating units (15, 16) are arranged in the first and/or second storage and retrieval routes (7, 9) for storage/retrieval of the loading units (3) in/from receiving units (17) of the storage arrangement and for transport of the loading units (3).

4. Storage system (1) according to at least one of the preceding claims, **characterised by**
at least one lifting device (18) for the loading units (3), by means of which the first and second storage region (4, 5) are connected to each other.

5. Storage system (1) according to at least one of claims 1 or 4, **characterised by** multiple lifting devices (18) which are distributed approximately uniformly over the storage arrangement (2) and/or which are distributed in the storage arrangement (2) as a function of a material flow (20) of the loading units (3).

6. Storage system (1) according to at least one of the preceding claims, **characterised in that**
the rotation (13) of the first orientation in relation to the second orientation (11, 12) is approximately 90°.

7. Storage system (1) according to at least one of the preceding claims, **characterised in that**
the first storage structure (8) has rack storage units (23) arranged in parallel rows (22) separated by the first storage and retrieval routes (7) and/or the second storage structure (10) has rack storage units (25) arranged in parallel rows (24) separated by the second storage and retrieval routes (9).

8. Storage system (1) according to at least one of the preceding claims, **characterised in that**
the storage arrangement (2) is block-shaped and/or the loading unit (3) is a pallet (3) loadable or loaded with goods (26).

9. Method (100) for shifting loading units (3) in a storage system (1) according to at least one of the preceding claims, in which
- a loading unit (3) in one of the two storage regions (4, 5) of the storage system (1) is stored or retrieved (110) and is transported (120) in this storage region (4, 5),
- the loading unit (3) is transferred (130) out of the one storage region (4, 5) into the other storage region (4, 5) and
- the loading unit (3) is transported (140) in the other storage region (4, 5).

## Revendications

1. Système de stockage (1) comportant un dispositif de stockage (2) pour le stockage d'unités de chargement (3), dans lequel
- le dispositif de stockage (2) comporte au moins une première zone de stockage (4) et une deuxième zone de stockage (5) disposée verticalement (6) au-dessus de la première zone de stockage (4), **caractérisé en ce que**
- la première zone de stockage (4) comporte une première structure de stockage (8) constituée par des premières voies de manœuvre horizontales (7) et la deuxième zone de stockage (5) comporte une deuxième structure de stockage (10) constituée par des deuxièmes voies de manœuvre horizontales (9), de sorte qu'une telle structure de stockage présente une structure de rangées parallèles de rangées de rayonnage parallèles l'une par rapport à l'autre, en alternance avec des voies de manœuvre parallèles l'une par rapport à l'autre,
- chaque voie de manœuvre dans une zone de stockage étant un couloir et/ou un passage qui est délimité des deux côtés, dans le sens transversal, par des ensembles de rayonnage de la structure de rayonnage correspondante et chaque voie de manœuvre étant une voie s'étendant au moins approximativement linéairement dans le sens longitudinal sur laquelle se déplace un système / moyen de manœuvre ;
- le système / moyen de manœuvre est équipé de premières unités de manœuvre conçues pour la première zone de stockage (4) et de deuxièmes unités de manœuvre conçues pour la deuxième zone de stockage, chacune étant conçue sous la forme d'un moyen de levage à convoyeur au sol combiné (16) pour transférer et/ou prélever du stock/mettre en stock les unités de chargement dans les première et deuxième zones de stockage (respectivement 4 et 5), également susceptible d'être désignée comme navette (16) ;
et
- une première orientation (11) de la première structure de stockage (8) est tournée (13) par rapport à une deuxième orientation (12) de la deuxième structure de stockage (10) ;
- le système de stockage (1) présentant une zone de traitement (19) pour les unités de chargement (3) qui est disposée verticalement (6) sous le dispositif de stockage (2) ;
- et le système de stockage comprenant au moins un dispositif de levage (18) pour les unités de chargement (3), dispositif qui peut également être désigné d'élévateur, au moyen duquel les première et deuxième zones de stockage (4, 5) sont reliées à la zone de traitement ; et
- la navette (16) transportant les unités de chargement sur ses voies de manœuvre (9) vers l'élévateur (18) le plus proche.

2. Système de stockage (1) selon la revendication 1, **caractérisé par** un système de manœuvre (14) destiné au transfert des unités de chargement (3) au sein du dispositif de stockage (2), le système de manœuvre (14) comportant des unités de manœuvre (15) se déplaçant dans les premières voies de manœuvre (7) et des deuxièmes unités de manœuvre (16) se déplaçant dans les deuxièmes voies de manœuvre (9).

3. Système de stockage (1) selon au moins la revendication précédente, **caractérisé en ce que**
les première et/ou deuxième unités de manœuvre (15, 16) sont conçues (7, 9) pour la mise en stock/le prélèvement du stock des unités de chargement (3) dans/depuis des unités de réception (17) du dispositif de chargement ainsi que pour le transfert des unités de chargement (3) sur les première et/ou deuxième voies de manœuvre.

4. Système de stockage (1) selon au moins l'une des revendications précédentes, **caractérisé par**
au moins un moyen de levage (18) des unités de chargement (3) moyennant lesquels les première et deuxième zones de stockage (4, 5) sont reliées l'une à l'autre.

5. Système de stockage (1) selon l'une au moins des revendications 1 ou 4, **caractérisé par**
plusieurs moyens de levage (18) répartis à peu près régulièrement dans le dispositif de stockage (2) et/ou répartis dans le dispositif de stockage (2) en fonction d'un flux de matériel (20) provenant des unités de chargement (3).

6. Système de stockage (1) selon l'une au moins des revendications précédentes, **caractérisé en ce que** la rotation (13) de la première orientation par rapport à la deuxième orientation (11, 12) est d'environ 90°.

7. Système de stockage (1) selon l'une au moins des revendications précédentes, **caractérisé en ce que** la première structure (8) comporte des unités de rayonnage de stockage (23) séparées par les premières voies de manœuvre (7) et disposées en rangées parallèles (22) et/ou la deuxième structure (10) comporte des unités de rayonnage de stockage (25) séparées par les deuxièmes voies de manœuvre (9) et disposées en rangées parallèles (24).

8. Système de stockage (1) selon l'une au moins des revendications précédentes, **caractérisé en ce que** le dispositif de stockage (2) est prévu sous forme de blocs et/ou l'unité de chargement (3) est une palette (3) chargée ou susceptible d'être chargée de produits (26).

9. Procédé (100) de transfert d'unités de chargement (3) au sein d'un système de stockage (1) selon l'une au moins des revendications précédentes, dans lequel
- une unité de chargement (3) est mise en stock ou prélevée du stock (110) dans une des zones de stockage (4, 5) du système de stockage (1) et transportée (120) au sein de ladite zone de stockage (4, 5),
- l'unité de chargement (3) est transférée (130) de l'une zone de stockage (4, 5) vers l'autre zone de stockage (4, 5) et
- l'unité de chargement (3) est transportée (140) au sein de l'autre zone de stockage (4, 5).
